# EUROPÄISCHE PATENTSCHRIFT

(11) **EP 1 004 782 B1**
(45) Veröffentlichungstag und Bekanntmachung des Hinweises auf die Patenterteilung: **29.09.2004**
(21) Anmeldenummer: 99123333.9
(22) Anmeldetag: 23.11.1999
(51) Int. Cl.: F16B 35/04

(54) **Rändelbolzen**
Knurled bolt
Boulon moleté

(30) Priorität: 27.11.1998 DE 19854792
(43) Veröffentlichungstag der Anmeldung: 31.05.2000
(73) Patentinhaber: Arnold Umformtechnik GmbH & Co. KG, 74670 Forchtenberg-Ernsbach (DE)
(72) Erfinder: Möller, Gerhard, 74670 Forchtenberg-Sindringen (DE)
(74) Vertreter: Patentanwälte Ruff, Wilhelm, Beier, Dauster & Partner

(56) Entgegenhaltungen:
- EP-A- 0 530 585
- GB-A- 2 182 555
- US-A- 1 932 358
- US-A- 3 687 501
- US-A- 4 106 619
- US-A- 4 393 638

## Beschreibung

Rändelbolzen dienen dazu, Gegenstände zu verbinden oder zu lagern. Die Rändelbolzen der hier betroffenen Art werden in Alu oder in Kunststoffmaterial eingebettet. Dies kann entweder durch Einpressen in das Bauteil oder durch Umspritzen bei der Herstellung des aus Kunststoff oder Alu bestehenden Bauteils geschehen.

Es ist bereits eine Rändelbolzen dieser Art bekannt (GB 2182555), der einen mit einem metrischen Gewinde versehenen Lagerabschnitt und einen gerändelten Einbettungsabschnitt aufweist. Der gerändelte Abschnitt hat einen kreisförmigen Querschnitt, wobei sowohl die Außenseite als auch die Innenseite der Rändelung auf einem Kreis liegen.

Bei einem weiteren drehfesten Verbinder (US 3687501) ist zwischen einem Kopf und einem Gewindeschaft ein kegelstumpfförmiger Abschnitt vorhanden, der drei über den Umfang verteilte Schneidvorsprünge aufweist.

Der Erfindung liegt die Aufgabe zugrunde, einen Rändelbolzen zu schaffen, der ein erhöhtes Überdrehmoment im Betrieb aufweist.

Zur Lösung dieser Aufgabe schlägt die Erfindung einen Rändelbolzen mit den Merkmalen des Anspruchs 1 vor. Weiterbildungen der Erfindung sind Gegenstand der abhängigen Ansprüche, deren Wortlaut ebenso wie der Wortlaut der Zuammenfassung durch Bezugnahme zum Inhalt der Beschreibung gemacht wird.

Der Einbettungsabschnitt kann entweder bei der Herstellung des aus Kunststoff oder Alu bestehenden Bauteils gleich in dem Kunststoffmaterial oder Alu eingebettet werden, oder aber bei einem fertigen Bauteil in eine Öffnung eingepresst werden. Während die bekannten Rändelbolzen einen gerändelten Einbettungsabschnitt aufweisen, dessen Außenumfang auf einer Kreiszylinderoberfläche liegt, weicht hier der Außenumfang von dieser Kreiszylinderfläche ab. Die trilobulare Form bedeutet, dass eine die Vorsprünge der Rändelung verbindende Linie an drei Stellen flacher verläuft als ein umbeschriebener Kreis.

In Weiterbildung der Erfindung kann vorgesehen sein, dass die Rändelung über den Umfang überall die gleiche Tiefe aufweist. Dies bedeutet dann, dass auch die tiefsten Stellen der die Rändelung bildenden Nuten auf einer Linie liegen, die eine trilobulare Form aufweist.

Die Erfindung schlägt vor, dass die Rändelung in axialer Richtung verläuft. Dies führt zusätzlich dazu, dass sich der Rändelbolzen mit geringeren Kräften einpressen lässt, ohne dass das Überdrehmoment seiner Anbringung darunter leidet, oder dass man bei gleicher Einpresskraft eine erhöhtes Überdrehmoment seiner Anbringung erhält.

Es kann ebenfalls vorgesehen sein, dass die Rändelung schräg zur Axialrichtung verläuft.

Bei der Einbettung des Rändelbolzens kann dieser auch eine Kreuzrändelung aufweisen.

Die Erfindung schlägt vor, dass der Einbettungsabschnitt durch einen Bund begrenzt sein kann, der damit nicht nur eine Begrenzung der Einpressbewegung bildet, sondern gleichzeitig auch den oberen Rand des Loches abdeckt. Es kann vorgesehen sein, dass der Bund zu dem Einbettungsabschnitt hin durch eine ebene Schulter begrenzt ist. Diese Schulter deckt den Randbereich der Öffnung großflächig ab.

In Weiterbildung kann vorgesehen sein, dass der Bund zu dem Lagerabschnitt hin einen Kegelabschnitt aufweist.

Erfindungsgemäß kann vorgesehen sein, dass der gerändelte Bereich des Einbettungsabschnitts nicht vollständig bis zu der Stirnfläche des Bundes reicht, sondern einen gewissen Abstand von dieser aufweist, um dort Platz für beim Einpressen möglicherweise aufgeworfenes Material zu schaffen.

Der Lagerabschnitt dient dazu, bestimmte Gegenstände zu lagern oder zu halten. Seine Form wird auf die Zwecke dieser Lagerung angepasst. Beispielsweise kann der Lagerabschnitt kreiszylindrisch sein, wenn an ihm ein Gegenstand drehbar gelagert werden soll. Er kann aber auch jede andere Form aufweisen.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Seitenansicht eines Rändelbolzens nach der Erfindung;
- Fig. 2: in vergrößertem Maßstab einen Schnitt längs Linie II-II;
- Fig. 3: ebenfalls in vergrößertem Maßstab einen Schnitt längs Linie III-III in Figur 1;
- Fig. 4: eine der Fig. 1 entsprechende Darstellung bei einer weiteren Ausführungsform.

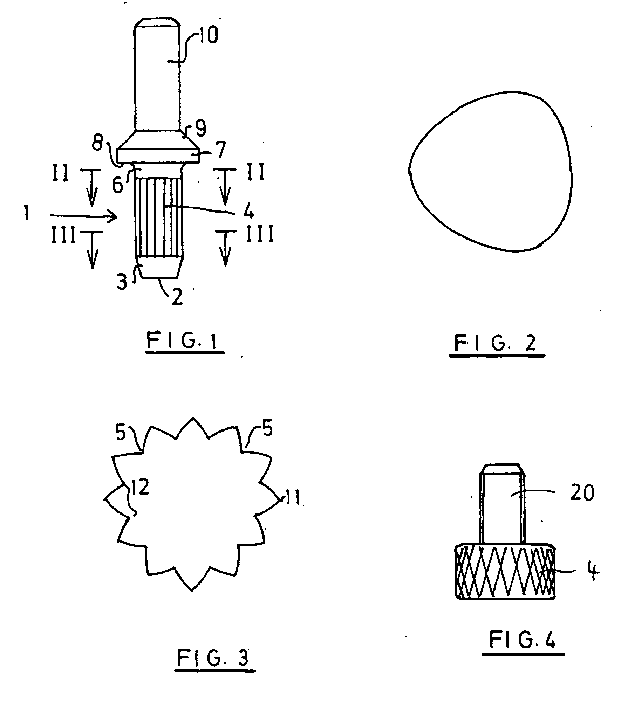

Figur 1 zeigt einen Rändelbolzen, wie er von der Erfindung vorgeschlagen wird. Der Rändelbolzen enthält einen Einbettungsabschnitt 1, mit dem er im dargestellten Beispiel in eine üblicherweise kreisrunde Öffnung eines Bauteils aus Kunststoff oder Aluminium eingepresst werden soll, um in diesem Bauteil verankert zu werden. Der Einbettungsabschnitt enthält im Bereich seines freien Endes 2 eine Kegelstumpfform , die derart angeordnet und ausgebildet ist, dass sie eine gewisse Führung beim Beginn des Einpressens ermöglicht. Diese Fläche 3 weist eine nur angenäherte Kegelform auf.

An die Kegelfläche 3 schließt sich ein zylindrischer Bereich 4 mit in axialer Richtung verlaufenden etwa dreieckigen Nuten 5 an. Diese Nuten 5 bilden die Rändelung. Die Rändelung reicht über den größten Teil des Einbettungsabschnitts 1. An die Rändelung schließt sich dann ein Übergangsbereich 6 an, der von einem Bund 7 begrenzt ist. Der Bund 7 weist zu dem Einbettungsabschnitt 1 hin eine ebene Schulter 8 auf. Auf der gegenüberliegenden Seite ist der Bund 7 durch eine Kegelfläche 9 begrenzt, die einen Übergang zu dem eigentlichen Lagerabschnitt 10 bildet. Im dargestellten Beispiel ist der Lagerabschnitt 10 als Kreiszylinder ausgebildet. Er könnte aber auch jede andere Form haben, in Abhängigkeit von dem hier anzubringenden oder zu haltenden Gegenstand.

Fig. 2 zeigt nun einen Querschnitt durch den Einbettungsabschnitt längs Linie II-II in Fig. 1. Hier ist die Form des Einbettungsabschnitts ohne die Rändelung zu sehen. Die Form wird üblicherweise als trilobular bezeichnet. Es handelt sich um eine Form, die an drei Stellen einen umbeschriebenen Kreis tangential berührt und an drei Stellen einen einbeschriebenen Kreis ebenfalls tangential berührt. Der Unterschied zwischen beiden Kreisen ist relativ klein.

Figur 3 zeigt nun einen Querschnitt durch den Einbettungsabschnitt 1 längs Linie III-III in Figur 1. Der gerändelte Bereich 4 enthält zwölf etwa dreieckige Nuten 5, die alle die gleiche Tiefe und die gleiche Form aufweisen. Sowohl die nach außen gerichteten Spitzen 11 der Querschnittsform als auch die nach innen gerichteten Kanten 12 der Nutflanken liegen jeweils auf einer Linie, die eine trilobulare Form aufweist.

Während im dargestellten Beispiel eine axiale Rändelung mit zwölf Nuten vorhanden ist, können auch andere Zahlen, Tiefen und Formen von Nutflanken vorgesehen sein. Die Nutflanken sind im dargestellten Beispiel als Kreisbögen ausgebildet, da der Einbettungsabschnitt durch einen Walzvorgang hergestellt wird.

Der Rändelbolzen nach der Erfindung hat den Vorteil, dass er sich im Vergleich zu einem Lagerstift mit einem kreiszylindrischen Einbettungsabschnitt bei gleichen sonstigen Abmessungen mit geringeren Kräften einpressen lässt, ohne dass das Überdrehmoment sich verringert. Ändert man die Lochgröße so, dass die Einpresskraft die gleiche bleibt, so ergibt sich ein erhöhtes Überdrehmoment der Verbindungen, insbesondere in Drehrichtung.

Fig. 4 zeigt eine der Fig. 1 entsprechende Seitenansicht bei einem Rändelbolzen, bei dem der Einbettungsabschnitt 4 einen größeren Durchmesser aufweist als der Lagerabschnitt 20. Im dargestellten Beispiel ist der Lagerabschnitt 20 mit einem Gewinde versehen. Der Rändelbolzen weist praktisch die Form einer Schraube auf, wobei allerdings keine Schraubenantriebsvertiefung vorhanden ist.

## Patentansprüche

1. Rändelbolzen zum Abringen in einem Bauteil, mit
1.1 einem auβerhalb des Bauteils anzuordnenden Lagerabschnitt (10, 20), der
1.1.1 bei befestigtem Rändelbolzen auβerhalb des Bauteils angeordnet ist, sowie mit
1.2 einem Einbettungsabschnitt (1), der
1.2.1 zum Einbetten in das Material des Bauteils bestimmt ist, und der
1.2.2 eine Rändelung(5) aufweist, **dadurch gekennzeichnet, dass**
1.3 die Rändelung (5) einen trilobularen Außenumfang aufweist.

2. Rändelbolzen nach Anspruch 1, bei dem die Rändelung (5) über den Umfang die gleiche Tiefe aufweist.

3. Rändelbolzen nach Anspruch 1 oder 2, bei dem die Rändelung in axialer Richtung verläuft.

4. Rändelbolzen nach einem der vorhergehenden Ansprüche, bei dem die Rändelung schräg zur Axialrichtung verläuft.

5. Rändelbolzen nach einem der vorhergehenden Ansprüche, bei dem die Rändelung eine Kreuzrändelung ist.

6. Rändelbolzen nach einem der vorhergehenden Ansprüche, bei dem der Einbettungsabschnitt (1) durch einen Bund (7) begrenzt ist.

7. Rändelbolzen nach Anspruch 6, bei dem der Bund (7) zum Einbettungsabschnitt (1) hin durch eine ebene Schulter (8) begrenzt ist.

8. Rändelbolzen nach Anspruch 6 oder 7, bei dem der Bund (7) zum Lagerabschnitt (10, 20) hin einen Kegelabschnitt (9) aufweist.

9. Rändelbolzen nach einem der Ansprüche 6 bis 8, bei dem die Rändelung nicht ganz bis zu dem Bund (7) reicht.

10. Rändelbolzen nach einem der vorhergehenden Ansprüche, bei dem der Lagerabschnitt (10, 20) kreiszylindrisch ausgebildet ist.

11. Rändelbolzen nach einem der vorhergehenden Ansprüche, bei dem der Lagerabschnitt (10, 20) ein Gewinde aufweist.

12. Rändelbolzen nach einem der vorhergehenden Ansprüche, bei dem der Einbettungsabschnitt (1) einen größeren Durchmesser aufweist als der Lagerabschnitt (10, 20).

## Claims

1. Knurled bolt to be inserted into a component, with
1.1 a bearing section (10, 20) to be disposed outside of the component that
1.1.1 is outside of the component when the knurled bolt is affixed, and with
1.2 an embedding section (1) that
1.2.1 is to be embedded in the component material, and that has
1.2.2 a knurling (5),
**characterized in that**
1.3 the knurling (5) has a trilobular external perimeter.

2. Knurled bolt according to claim 1, wherein the knurling (5) has the same depth across the perimeter.

3. Knurled bolt according to claim 1 or 2, wherein the knurling runs in an axial direction.

4. Knurled bolt according to one of the prior claims, wherein the knurling is angled in relation to the axial direction.

5. Knurled bolt according to one of the prior claims, wherein the knurling is a cross-knurling.

6. Knurled bolt according to one of the prior claims, wherein the embedded section (1) is delimited by a collar (7).

7. Knurled bolt according to claim 6, wherein the collar (7) facing the embedded section (1) is delimited by a shoulder (8).

8. Knurled bolt according to claim 6 or 7, wherein the collar (7) facing the bearing section (10, 20) has a conical section (9).

9. Knurled bolt according to one of claims 6 to 8, wherein the knurling does not extend completely to the collar (7).

10. Knurled bolt according to one of the prior claims, wherein the bearing section (10, 20) is cylindrical.

11. Knurled bolt according to one of the prior claims, wherein the bearing section (10, 20) has a thread.

12. Knurled bolt according to one of the prior claims, wherein the embedding section (1) has a larger diameter than the bearing section (10, 20).

## Revendications

1. Un goujon cannelé destiné au montage dans une pièce de construction, et comportant
1.1 une section de palier (10, 20) qui doit être disposée à l'extérieur de la pièce de construction, et qui
1.1.1 après la fixation du goujon cannelé se situe à l'extérieur de la pièce de construction, ainsi
1.2 qu'une section de liaison (1) qui
1.2.1 est destinée à être introduite dans le matériau de la pièce de construction, et qui
1.2.2 présente des cannelures (5),
**caractérisé par le fait que**
1.3 les cannelures (5) possèdent un pourtour trilobé.

2. Un goujon cannelé conforme à la revendication 1, où les cannelures (5) possèdent la même profondeur sur toute l'enveloppe.

3. Un goujon cannelé conforme à la revendication 1 ou 2, où les cannelures sont pratiquées dans le sens axial.

4. Un goujon cannelé conforme à une des revendications précédentes, où les cannelures sont en biais par rapport au sens axial.

5. Un goujon cannelé conforme à une des revendications précédentes, où les cannelures sont en croix.

6. Un goujon cannelé conforme à une des revendications précédentes, où la section de liaison (1) est limitée par un épaulement (7).

7. Un goujon cannelé conforme à la revendication 6, où l'épaulement (7) est limité du côté de la section de liaison (1) par une face d'appui (8).

8. Un goujon cannelé conforme à la revendication 6 ou 7, où l'épaulement (7) possède une section conique (9) du côté de la section de palier (10, 20).

9. Un goujon cannelé conforme une des revendications 6 à 8, où les cannelures n'atteignent pas l'épaulement (7).

10. Un goujon cannelé conforme à une des revendications précédentes, où la section de palier (10, 20) est cylindrique.

11. Un goujon cannelé conforme à une des revendications précédentes, où la section de palier (10, 20) présente un filetage.

12. Un goujon cannelé conforme à une des revendications précédentes, où la section de liaison (1) présente un diamètre supérieur à celui de la section de palier (10, 20).
